# EUROPÄISCHE PATENTSCHRIFT

(11) **EP 3 388 311 B1**
(45) Veröffentlichungstag und Bekanntmachung des Hinweises auf die Patenterteilung: **08.09.2021**
(21) Anmeldenummer: 18166235.4
(22) Anmeldetag: 09.04.2018
(51) Int. Cl.: B62D 15/02, B60W 30/06

(54) **VERFAHREN ZUM FERNGESTEUERTEN MANÖVRIEREN EINES KRAFTFAHRZEUGS AUF EINER PARKFLÄCHE, INFRASTRUKTURVORRICHTUNG FÜR EINE PARKFLÄCHE SOWIE PARKFLÄCHENKOMMUNIKATIONSSYSTEM**
METHOD FOR REMOTE CONTROLLED MANOEUVRING OF A MOTOR VEHICLE ON A PARKING LOT, INFRASTRUCTURE DEVICE FOR A PARKING LOT AND PARKING LOT COMMUNICATION SYSTEM
PROCÉDÉ DE MAN UVRE COMMANDÉE À DISTANCE D'UN VÉHICULE AUTOMOBILE SUR UNE SURFACE DE STATIONNEMENT, DISPOSITIF D'INFRASTRUCTURE POUR UNE SURFACE DE STATIONNEMENT AINSI QUE SYSTÈME DE COMMUNICATION POUR SURFACES DE STATIONNEMENT

(30) Priorität: 10.04.2017 DE 102017107701
(43) Veröffentlichungstag der Anmeldung: 17.10.2018
(73) Patentinhaber: Valeo Schalter und Sensoren GmbH, 74321 Bietigheim-Bissingen (DE)
(72) Erfinder: Abuladze, Grigory, 74321 Bietigheim-Bissingen (DE)
(74) Vertreter: Pothmann, Karsten

(56) Entgegenhaltungen:
- DE-A1-102012 222 562
- DE-A1-102014 211 557

## Beschreibung

Die Erfindung betrifft ein Verfahren zum ferngesteuerten Manövrieren eines Kraftfahrzeugs auf einer Parkfläche. Die Erfindung betrifft außerdem eine Infrastrukturvorrichtung für eine Parkfläche sowie ein Parkflächenkommunikationssystem mit einer Infrastrukturvorrichtung und zumindest einem Kraftfahrzeug.

Es ist bereits aus dem Stand der Technik bekannt, ein Kraftfahrzeug auf einer Parkfläche autonom zu manövrieren. Eine solche Parkfläche kann beispielsweise ein öffentlicher Parkplatz sein, welcher mehrere Stellplätze bzw. Parkplätze zum Abstellen des Kraftfahrzeugs aufweist. Darüber hinaus weisen derartige Parkflächen üblicherweise eine Mehrzahl von Fahrgassen auf, welche zu den Stellplätzen führen. Ein Fahrer des Kraftfahrzeugs kann das Kraftfahrzeug beispielsweise an einem Einfahrtsbereich der Parkfläche abstellen und das Kraftfahrzeug verlassen, wobei das Kraftfahrzeug anschließend selbstständig und vollautonom auf der Parkfläche innerhalb der Fahrgassen zu einem freien Stellplatz fährt. In gleicher Weise kann das Kraftfahrzeug von dem Stellplatz aus selbstständig aus der Parkfläche heraus zu einem Ausfahrtsbereich der Parkfläche fahren, von wo aus der Fahrer wieder in das Kraftfahrzeug einsteigen kann. Ein derartiges Verfahren wird auch als Valet-Parken oder Valet-Parking mittels eines selbstfahrenden Kraftfahrzeugs bezeichnet.

Die DE 10 2014 221 751 A1 zeigt beispielsweise ein Verfahren zum Führen eines Fahrzeugs auf einem Parkplatz, wobei eine Route auf dem Parkplatz von einer Startposition zu einer Zielposition fahrzeugextern ermittelt wird, wobei zumindest ein Teilstück der Route an das Fahrzeug über ein Kommunikationsnetzwerk gesendet wird und wobei das Fahrzeug beim Abfahren des Teilstücks der Route auf eine Abweichung beim autonomen Abfahren des Teilstücks mittels eines Überwachungssystems überwacht wird.

Die DE 10 2014 211 557 A1 beschreibt ein Valet-Parking-System zum automatischen Verbringen eines Fahrzeugs zu einem Parkplatz innerhalb eines vorgesehenen Parkraums, wobei ein Parkplatzüberwachungssystem des Valet-Parking-Systems dazu ausgebildet ist, den aktuellen Belegungszustand von Parkplätzen das Parkraums zu erfassen und an eine zentrale Steuereinheit zu übermitteln.

In der DE 10 2014 221 768 A1 ist ein Verfahren zum Betreiben eines Fahrzeugs offenbart, wobei das Fahrzeug autonom auf einem Parkplatz navigiert, indem es ein oder mehrere fahrzeugexterne Signale detektiert und dem oder den detektieren Signalen folgt.

Weiterhin zeigt die DE 10 2012 222 562 A1 ein Verfahren gemäß Oberbegriff des Anspruchs 1.

Nachteilig am Stand der Technik ist, dass das Kraftfahrzeug dazu ausgelegt sein muss, autonom zu fahren. Das Kraftfahrzeug muss also als ein selbstfahrendes Fahrzeug ausgebildet sein. Dazu muss das Kraftfahrzeug seinen Umgebungsbereich, also die Parkfläche, selbstständig überwachen können und beispielsweise dahingehend analysieren können, ob sich Objekte in seiner Fahrgasse befinden, mit welchen das Kraftfahrzeug kollidieren könnte. Diese Überwachung und Analyse des Umgebungsbereiches ist rechenaufwendig. Außerdem sind die technischen Voraussetzungen zum autonomen Fahren in der Regel nur bei neueren, moderneren Fahrzeugmodellen gegeben.

Es ist Aufgabe der vorliegenden Erfindung, eine Lösung bereitzustellen, wie Kraftfahrzeuge besonders einfach und unaufwendig auf einer Parkfläche manövriert werden können.

Diese Aufgabe wird erfindungsgemäß durch ein Verfahren, durch eine Infrastrukturvorrichtung sowie durch ein Parkflächenkommunikationssystem mit den Merkmalen gemäß den jeweiligen unabhängigen Ansprüchen gelöst. Vorteilhafte Ausführungsformen der Erfindung sind Gegenstand der abhängigen Ansprüche, der Beschreibung sowie der Figuren.

Gemäß einem Aspekt eines Verfahrens zum ferngesteuerten Manövrieren eines Kraftfahrzeugs auf einer Parkfläche mittels einer fahrzeugexternen, parkflächenseitigen Infrastrukturvorrichtung werden insbesondere Positionsdaten des Kraftfahrzeugs auf der Parkfläche bestimmt, ein Kommunikationskanal ausgehend von der Infrastrukturvorrichtung in Richtung des Kraftfahrzeugs aufgebaut, eine Längsführung und eine Querführung des Kraftfahrzeugs über den Kommunikationskanal zum Fernsteuern des Kraftfahrzeugs übernommen und das Kraftfahrzeug auf der Parkflächenabhängigkeit von den Positionsdaten des Kraftfahrzeugs manövriert. Insbesondere werden die vorher genannten Schritte durch die parkflächenseitige Infrastrukturvorrichtung durchgeführt.

Besonders bevorzugt werden bei einem Verfahren zum ferngesteuerten Manövrieren eines Kraftfahrzeugs auf einer Parkfläche mittels einer fahrzeugexternen, parkflächenseitigen Infrastrukturvorrichtung Positionsdaten des Kraftfahrzeugs auf der Parkfläche bestimmt, ein Kommunikationskanal ausgehend von der Infrastrukturvorrichtung in Richtung des Kraftfahrzeugs aufgebaut, eine Längsführung und eine Querführung des Kraftfahrzeugs über den Kommunikationskanal zum Fernsteuern des Kraftfahrzeugs übernommen und das Kraftfahrzeug auf der Parkfläche in Abhängigkeit von den Positionsdaten des Kraftfahrzeugs manövriert. Darüber hinaus werden die vorgenannten Schritte durch die parkflächenseitige Infrastrukturvorrichtung durchgeführt. Insbesondere werden die vorgenannten Schritte nur durch die parkflächenseitige Infrastrukturvorrichtung, insbesondere ohne Zutun des Kraftfahrzeugs, durchgeführt.

Mittels des Verfahrens kann das Kraftfahrzeug, beispielsweise zum Durchführen eines Parkmanövers, durch die Infrastruktur der Parkfläche gesteuert werden, wobei ein aufwendiges Lokalisieren des Kraftfahrzeugs und komplexe Rechenvorgänge zum Manövrieren des Kraftfahrzeugs an die Infrastruktur übertragen werden. Die Parkfläche umfasst insbesondere eine Mehrzahl von Stellplätzen bzw. Parkplätzen für das Kraftfahrzeug sowie eine Mehrzahl von Fahrgassen, welche zu den einzelnen Stellplätzen führen und innerhalb welchen sich das Kraftfahrzeug bewegen kann. Die Parkfläche kann beispielsweise ein öffentlicher Parkplatz, ein privater Parkplatz, eine Tiefgarage oder ein Teil eines Parkhauses sein. Beispielsweise kann vorgesehen sein, dass ein Fahrer des Kraftfahrzeugs das Kraftfahrzeug an einem Einfahrtsbereich der Parkfläche bzw. an einer Zufahrt zu der Parkfläche abstellt und das Kraftfahrzeug verlässt. Ausgehend von dem Einfahrtsbereich wird dann das Kraftfahrzeug durch die Infrastrukturvorrichtung ferngesteuert und auf der Parkfläche bzw. innerhalb der Parkfläche bewegt und manövriert.

Die Infrastrukturvorrichtung, welche der Parkfläche zugeordnet ist, ist eine sogenannte intelligente Infrastruktur bzw. "Smart Infrastructure" (SI). Dies bedeutet beispielsweise, dass die Infrastrukturvorrichtung mehrere intelligent vernetzte Einrichtungen aufweisen kann, mittels derer das Kraftfahrzeug auf der Parkfläche lokalisiert und ferngesteuert manövriert werden kann. Die intelligent vernetzten Einrichtungen sind beispielsweise zumindest eine Sensoreinrichtung zum Erfassen von Sensordaten aus der Parkfläche, eine Kommunikationseinheit zum Aufbauen des Kommunikationskanals, eine Recheneinheit zum Bestimmen von Positionsdaten des Kraftfahrzeugs anhand der Sensordaten sowie eine Steuereinrichtung zum Fernsteuern des Kraftfahrzeugs. Die Recheneinheit und die Kommunikationseinheit können beispielsweise in die Steuereinrichtung integriert sein. Mittels der Recheneinheit kann Rechenkapazität bzw. Rechenleistung bereitgestellt werden, sodass beispielsweise die Sensordaten der zumindest einen Sensoreinrichtung besonders schnell zum Bestimmen der Positionsdaten des Kraftfahrzeugs ausgewertet werden können. Die Steuereinrichtung kann beispielsweise die Steuersignale zum Fernsteuern des Kraftfahrzeugs generieren und über die Kommunikationseinheit an das Kraftfahrzeug versenden. Dadurch, dass die intelligente Infrastruktur die Positionsbestimmung des Kraftfahrzeugs sowie die Fernsteuerung des Kraftfahrzeugs übernimmt, kann das Kraftfahrzeug besonders einfach ausgebildet sein. Dies bedeutet beispielsweise, dass es sich bei dem Kraftfahrzeug nicht um ein selbstfahrendes Kraftfahrzeug handeln muss.

Die Infrastrukturvorrichtung ist zumindest teilweise auf der Parkfläche angeordnet. Beispielsweise kann ein Teil der Rechenkapazität auch von einer parkflächenexternen Servereinrichtung der Infrastrukturvorrichtung bereitgestellt werden. Das Kraftfahrzeug wird von der Infrastrukturvorrichtung auf der Parkfläche lokalisiert, indem die Positionsdaten des Kraftfahrzeugs, beispielsweise relativ zu einem Bezugspunkt auf der Parkfläche, von der Infrastrukturvorrichtung bestimmt werden. Außerdem ist die Infrastrukturvorrichtung dazu ausgelegt, den Kommunikationskanal zu dem Kraftfahrzeug aufzubauen, über welchen das Kraftfahrzeug ferngesteuert werden kann. Der Kommunikationskanal kann beispielsweise ein unidirektionaler Kanal sein, über welchen die Infrastrukturvorrichtung lediglich Steuerbefehle in Richtung des Kraftfahrzeugs versendet, um dieses fernzusteuern. Auch kann der Kommunikationskanal bidirektional ausgebildet sein, sodass die Infrastrukturvorrichtung zusätzlich Daten des Kraftfahrzeugs von dem Kraftfahrzeug anfordern und auslesen kann. Das Auslesen der Daten kann ohne das Zutun des Kraftfahrzeugs erfolgen, das Kraftfahrzeug erlaubt der Infrastrukturvorrichtung insbesondere lediglich den Zugriff auf die fahrzeugseitigen Daten. Vorzugsweise wird der Kommunikationskanal über ein lokales Drahtlosnetz auf der Parkfläche von der Infrastrukturvorrichtung aufgebaut. Das lokale Drahtlosnetz kann beispielsweise ein lokales Wi-Fi sein. Über dieses Drahtlosnetz kann die Infrastrukturvorrichtung mit dem Kraftfahrzeug kommunizieren.

Um nun das Kraftfahrzeug auf der Parkfläche in Abhängigkeit von den Positionsdaten des Kraftfahrzeugs auf der Parkfläche fernsteuern zu können, kann die Infrastrukturvorrichtung auf die Längsführung und die Querführung des Kraftfahrzeugs zugreifen und diese übernehmen. Dies bedeutet, dass die Infrastrukturvorrichtung insbesondere in eine Lenkung, einen Antriebsmotor und ein Bremssystem des Kraftfahrzeugs eingreifen kann. Die Infrastrukturvorrichtung ist also dazu ausgelegt, das Kraftfahrzeug automatisch zu lenken, zu beschleunigen und abzubremsen.

Durch das Fernsteuern des Kraftfahrzeugs durch die Infrastrukturvorrichtung werden sämtliche rechenaufwendige Operationen auf die Infrastrukturvorrichtung übertragen, wo diese leichter und schneller zu handhaben sind. Dies bedeutet, dass eine Lokalisierung sowie ein Manövrieren des Kraftfahrzeugs durch die Infrastrukturvorrichtung übernommen werden. Daraus ergibt sich der Vorteil, dass fahrzeugseitige Komponenten besonders kostengünstig ausgestaltet werden können. Eine Positionserfassung des Kraftfahrzeugs mittels teuren, präzisen Sensoren kann dabei der Infrastrukturvorrichtung zugewiesen werden, wobei diese die Positionserfassung einer Vielzahl von Kraftfahrzeugen als Service bereitstellen kann. Außerdem können durch die Infrastrukturvorrichtung beim Manövrieren des Kraftfahrzeugs innerhalb der Parkfläche Algorithmen und Techniken genutzt werden, welche nicht zu einem fahrzeugseitigen Steuergerät passen bzw. von diesem übernommen werden können. Die Fernsteuerung des Kraftfahrzeugs kann also unabhängig von einer Ausgestaltung des fahrzeugseitigen Steuergerätes bereitgestellt werden.

In einer Weiterbildung der Erfindung wird durch die Infrastrukturvorrichtung zum Übernehmen der Längsführung und der Querführung des Kraftfahrzeugs auf einen Antrieb und ein Fahrwerk des Kraftfahrzeugs zugegriffen, wobei durch die Infrastrukturvorrichtung Steuerbefehle für Aktoren des Fahrwerks und des Antriebs generiert und über den Kommunikationskanal versendet werden. Insbesondere wird ohne Zwischenschaltung des fahrzeugseitigen Steuergeräts bzw. ECU ("Electronic Control Unit") auf das Fahrwerk, insbesondere Lenkung und Bremse, und den Antrieb, insbesondere den Antriebsmotor, zugegriffen. Das Kraftfahrzeug umfasst vorzugsweise ein sogenanntes "X-by-Wire"-System. Bei einem "X-by-Wire"-System werden mechanische Verbindungen im Kraftfahrzeug ersetzt, indem Steuersignale leitungsgebunden an die ausführenden Aktoren versendet werden. Ein solches "X-by-Wire"-System kann beispielsweise ein "Drive-by-Wire"-System sein, welches ein "Brake-by-Wire"- und ein "Steer-by-Wire"- System umfassen kann. "Drive-by-Wire" beschreibt das partielle Fahren oder Steuern des Kraftfahrzeugs ohne mechanische Kraftübertragung von Bedienelemente zu entsprechenden Stellelemente bzw. Aktoren, beispielsweise zu Servomotoren bzw. elektromechanischen Aktoren.

"Brake-by-Wire" beschreibt ein Bremssystem, in welchem die Bremsbetätigungs- und die Übertragungseinrichtung, also ein Bremspedal sowie eine Bremse, voneinander entkoppelt sind. "Steer-by-Wire" beschreibt ein Lenksystem, bei dem ein Lenkbefehl von einem Sensor über ein Steuergerät elektrisch zum elektromechanischen Aktor, der den Lenkbefehl ausführt, weitergeleitet wird. Es wird also die mechanische Verbindung zwischen Lenkrad und gelenkten Rädern des Kraftfahrzeugs ersetzt. Ein Kraftfahrzeug mit einem solchen "X-by-Wire"-System kann besonders einfach und unaufwendig ferngesteuert werden, da über den Kommunikationskanal von der Infrastrukturvorrichtung lediglich auf eine "X-by-Wire"-Schnittstelle bzw. ein "X-by-Wire"-Interface des Kraftfahrzeugs zugegriffen werden muss. Die Steuerbefehle für die verschiedenen Aktoren zum Lenken, Beschleunigen und Abbremsen des Kraftfahrzeugs werden dann direkt von der Infrastrukturvorrichtung, insbesondere in Abhängigkeit von den aktuellen Positionsdaten des Kraftfahrzeugs auf der Parkfläche, erzeugt und über den Kommunikationskanal an die entsprechenden Aktoren des Kraftfahrzeugs weitergeleitet. Somit kann das Kraftfahrzeug besonders einfach und ohne Zutun des Kraftfahrzeugs auf der Parkfläche ferngesteuert werden.

In einer vorteilhaften Ausführungsform der Erfindung werden die Positionsdaten des Kraftfahrzeugs auf der Parkfläche mittels zumindest einer parkflächenseitigen Sensoreinrichtung der Infrastrukturvorrichtung erfasst. Vorzugsweise erfasst die Infrastrukturvorrichtung die Positionsdaten des Kraftfahrzeugs mittels zumindest einer parkflächenseitigen Kamera und/oder zumindest einem parkflächenseitigen Abstandssensor, insbesondere einem Ultraschallsensor und/oder einem Lidar-Sensor und/oder einem Radarsensor. Diese Sensoren können verteilt auf der Parkfläche angeordnet sein und die Parkfläche überwachen. Sensordaten der zumindest einen Sensoreinrichtung können zur Analyse und Auswertung an die Recheneinheit der Infrastrukturvorrichtung übertragen werden, welche die Sensordaten auswertet und anhand der Sensordaten das Kraftfahrzeug auf der Parkfläche lokalisieren kann. Die zumindest eine Kamera kann beispielsweise als eine Stereokamera ausgebildet sein.

Bevorzugt werden mittels der zumindest einen parkflächenseitigen Sensoreinrichtung der Infrastrukturvorrichtung zusätzlich die Parkfläche beschreibende Umfelddaten erfasst, wobei das Kraftfahrzeug zusätzlich in Abhängigkeit von den Umfelddaten ferngesteuert manövriert wird. Solche Umfelddaten bzw. Umgebungsdaten können die Parkfläche objektbasiert beschreiben, sodass anhand der Umfelddaten Objekte auf der Parkfläche erkannt und lokalisiert werden können. Solche Objekte können dynamische Objekte, beispielsweise andere Fahrzeuge, oder statische Objekte, beispielsweise Parkpoller oder andere Hindernisse für das Kraftfahrzeug, sein. Um eine Kollision des Kraftfahrzeugs mit diesen Objekten während des Manövrierens zu verhindern, können zusätzlich zu den Positionsdaten des Kraftfahrzeugs auch Objekte auf der Parkfläche sowie deren Positionen relativ zum Kraftfahrzeug anhand der Umfelddaten erfasst werden. So kann das Kraftfahrzeug kollisionsfrei, beispielsweise zu einem freien Parkplatz, ferngesteuert manövriert werden. Aus dem Erfassen der Umfelddaten der Parkfläche und der Positionsdaten des Kraftfahrzeugs mittels der zumindest einen parkflächenseitigen Sensoreinrichtung ergibt sich der Vorteil, dass auch Kraftfahrzeuge auf der Parkfläche ferngesteuert werden können, welche solche Sensoren zum Erfassen der Position und/oder des Umfelds nicht aufweisen oder deren Sensoren keine ausreichende Präzision bei der Positionsbestimmung und der Umfeldbestimmung aufweisen. Somit kann auch ein besonders einfach und kostengünstig ausgebildetes Kraftfahrzeug ferngesteuert manövriert werden, sodass der Fahrer das Kraftfahrzeug beispielsweise nicht selbstständig einparken und wieder ausparken muss.

Erfindungsgemäß wird das Kraftfahrzeug mittels der Infrastrukturvorrichtung durch Bestimmen der Positionsdaten zu vorbestimmten Zeitpunkten auf der Parkfläche lokalisiert und das Kraftfahrzeug entlang einer vorbestimmten Bewegungsbahn zu einem Zielort auf der Parkfläche ferngesteuert manövriert. Der Zielort kann beispielsweise ein freier Parkplatz bzw. eine freie Parklücke sein, in welchen bzw. in welche das Kraftfahrzeug eingeparkt werden soll. Auch kann der Zielort ein Abholbereich sein, welcher sich beispielsweise an einem Ausfahrtsbereich der Parkfläche befindet und an welchem der Fahrer das Kraftfahrzeug abholen und wieder übernehmen kann. Dabei wird das Kraftfahrzeug mittels der Infrastrukturvorrichtung alle 100ms, vorzugsweise alle 0,1ms, auf der Parkfläche lokalisiert. Dies bedeutet, dass ein Standort des Kraftfahrzeugs auf der Parkfläche kontinuierlich zu vorbestimmten Messzeitpunkten überwacht und bestimmt wird, sodass das Kraftfahrzeug entlang der Bewegungsbahn bzw. Fahrtrajektorie kollisionsfrei manövriert werden kann. Die Bewegungsbahn führt dabei insbesondere von einer Startposition bzw. einem Startort des Kraftfahrzeugs durch die Fahrgassen auf der Parkfläche zu dem Zielort bzw. einer Zielposition. Bevorzugt führt die Bewegungsbahn von einem Einfahrtsbereich der Parkfläche zu einem freien Parkplatz und/oder von einem Parkplatz des Kraftfahrzeugs auf der Parkfläche zu einem Ausfahrtsbereich der Parkfläche. Somit wird es beispielsweise ermöglicht, dass der Fahrer das Kraftfahrzeug an dem Einfahrtsbereich bzw. Zugang zu der Parkfläche abstellt und das Kraftfahrzeug verlässt. Das Kraftfahrzeug wird dann von der Infrastrukturvorrichtung, insbesondere ohne Zutun des Kraftfahrzeugs, zu einem freien Parkplatz bzw. Stellplatz navigiert bzw. ferngesteuert und dort abgestellt bzw. geparkt. In diesem Fall ist der Startort der Einfahrtsbereich und der Zielort ist der freie Parkplatz. Auch kann vorgesehen sein, dass das Kraftfahrzeug, das in einem der Parkplätze geparkt bzw. abgestellt ist, von dort aus zu dem Ausfahrtsbereich bzw. dem Abholbereich manövriert wird, an welchem der Fahrer das Kraftfahrzeug wieder übernehmen kann. Dies eignet sich insbesondere für Parkflächen, bei denen ein Betreten der Parkfläche von Person untersagt ist. In diesem Fall ist der Startort der Parkplatz, in welchem das Kraftfahrzeug geparkt war, und der Zielort ist der Ausfahrtsbereich.

Es erweist sich als vorteilhaft, wenn durch die Infrastrukturvorrichtung eine Belegung der Parkplätze erfasst wird und die Bewegungsbahn durch die Infrastrukturvorrichtung entlang einer Fahrgasse auf der Parkfläche zu einem freien, als unbelegt erfassten Parkplatz bestimmt wird. Dazu kann die Belegung bzw. ein Belegungszustand der Parkplätze beispielsweise von der zumindest einen parkflächenseitigen Sensoreinrichtung, welche insbesondere zumindest eine Kamera umfasst, erfasst werden. Auch kann vorgesehen sein, dass an jedem Parkplatz auf der Parkfläche eine Kommunikationseinheit der Infrastrukturvorrichtung angeordnet ist, mittels welcher erfasst werden kann, ob der Parkplatz belegt oder unbelegt ist. Die Kommunikationseinheiten können den Belegungszustand des Parkplatzes an die Recheneinheit der Infrastrukturvorrichtung übermitteln, welche daraufhin, beispielsweise ausgehend von dem Einfahrtsbereich der Parkfläche, die Bewegungsbahn für das Kraftfahrzeug zu diesem freien Parkplatz bestimmen kann.

Vorzugsweise wird zumindest eine geometrische Abmessung des Kraftfahrzeugs an einem Startort des Kraftfahrzeugs vor Beginn des Manövrierens des Kraftfahrzeugs zu einem Zielort durch die Infrastrukturvorrichtung bestimmt. Mit anderen Worten bedeutet dies, dass das Kraftfahrzeug vor Beginn der Fernsteuerung, beispielsweise an dem Einfahrtsbereich zu der Parkfläche, vermessen wird. Beispielsweise kann eine dreidimensionale Form des Kraftfahrzeugs mittels von der zumindest einen Kamera der Parkfläche erfassten Kameradaten bestimmt werden. So kann bestimmt werden, ob ein als unbelegt bewerteter Parkplatz geeignet für das Kraftfahrzeug ist, insbesondere ob dieser Parkplatz groß genug ist, um das Kraftfahrzeug beschädigungsfrei einparken zu können.

In einer vorteilhaften Weiterbildung der Erfindung wird zumindest eine fahrzeugseitige Kenngröße über den Kommunikationskanal von der Infrastrukturvorrichtung ausgelesen. Vorzugsweise werden als die zumindest eine fahrzeugseitige Kenngröße Fahrdynamikdaten, insbesondere Geschwindigkeitsdaten, Beschleunigungsdaten, Lenkwinkeldaten, und/oder als die zumindest eine fahrzeugseitige Kenngröße Fahrzeugmodelldaten, insbesondere eine Geometrie, eine Kinematik, ein Steuerungsverhalten, ausgelesen. Die Fahrdynamikdaten können als Fahrzeugzustandsdaten über das "X-by-Wire"-Interface ausgelesen werden. Optional können auch Fahrzeugmodelldaten, welche das Kraftfahrzeug beschreiben, ausgelesen werden. Das Kraftfahrzeug kann dann in Abhängigkeit von diesen ausgelesenen fahrzeugseitigen Daten bzw. Kenngrößen manövriert werden. Ob diese Daten bereitstehen, ist abhängig von einer Ausgestaltung, insbesondere einem Alter, des Kraftfahrzeugs. Wenn diese Daten also vorliegen, können sie in vorteilhafter Weise bei der Fernsteuerung des Kraftfahrzeugs, beispielsweise bei der Bestimmung der Bewegungsbahn, berücksichtigt werden.

Die Erfindung betrifft außerdem eine Infrastrukturvorrichtung für eine Parkfläche zum ferngesteuerten Manövrieren eines Kraftfahrzeugs auf der Parkfläche, welche dazu ausgelegt ist, ein erfindungsgemäßes Verfahren oder eine vorteilhafte Ausführungsformen davon durchzuführen. Die Infrastrukturvorrichtung bzw. "Smart Infrastructure" umfasst insbesondere zumindest eine Sensoreinrichtung zum Erfassen von Sensordaten aus der Parkfläche, eine Kommunikationseinheit zum Aufbauen eines Kommunikationskanals ausgehend von der Infrastrukturvorrichtung in Richtung des Kraftfahrzeugs sowie eine Recheneinheit zum Bestimmen von Positionsdaten des Kraftfahrzeugs auf der Parkfläche anhand der von der zumindest einen Sensoreinrichtung erfassten Sensordaten. Außerdem umfasst die Infrastrukturvorrichtung insbesondere eine Steuereinrichtung, welche dazu ausgelegt ist, zum Fernsteuern des Kraftfahrzeugs eine Längsführung und eine Querführung des Kraftfahrzeugs zu übernehmen und das Kraftfahrzeug auf der Parkfläche in Abhängigkeit von den Positionsdaten des Kraftfahrzeugs zu manövrieren. Die Infrastrukturvorrichtung ist insbesondere dazu ausgelegt, das Kraftfahrzeug präzise auf der Parkfläche zu lokalisieren und zu überwachen. Die Steuereinrichtung kann die Recheneinheit aufweisen, welche eine hohe Rechenleistung zum zuverlässigen Fernsteuern des Kraftfahrzeugs bereitstellt. Die Recheneinheit kann beispielsweise auch mit einer fahrzeugexternen, parkflächenexternen Servereinrichtung kommunizieren, in welcher beispielsweise Informationen über die Parkfläche, beispielsweise eine Lage der Fahrgassen, hinterlegt sind.

Ferner betrifft die Erfindung ein Parkflächenkommunikationssystem aufweisend zumindest ein Kraftfahrzeug und eine erfindungsgemäße Infrastrukturvorrichtung. Das Kraftfahrzeug umfasst insbesondere zumindest ein "X-by-Wire"-System, welches einen Zugriff der fahrzeugexternen Infrastrukturvorrichtung auf eine Längsführung und eine Querführung des Kraftfahrzeugs zum Fernsteuern des Kraftfahrzeugs erlaubt bzw. bereitstellt.

Die mit Bezug auf das erfindungsgemäße Verfahren vorgestellten bevorzugten Ausführungsformen und deren Vorteile gelten entsprechend für die erfindungsgemäße Infrastrukturvorrichtung sowie für das erfindungsgemäße Parkflächenkommunikationssystem.

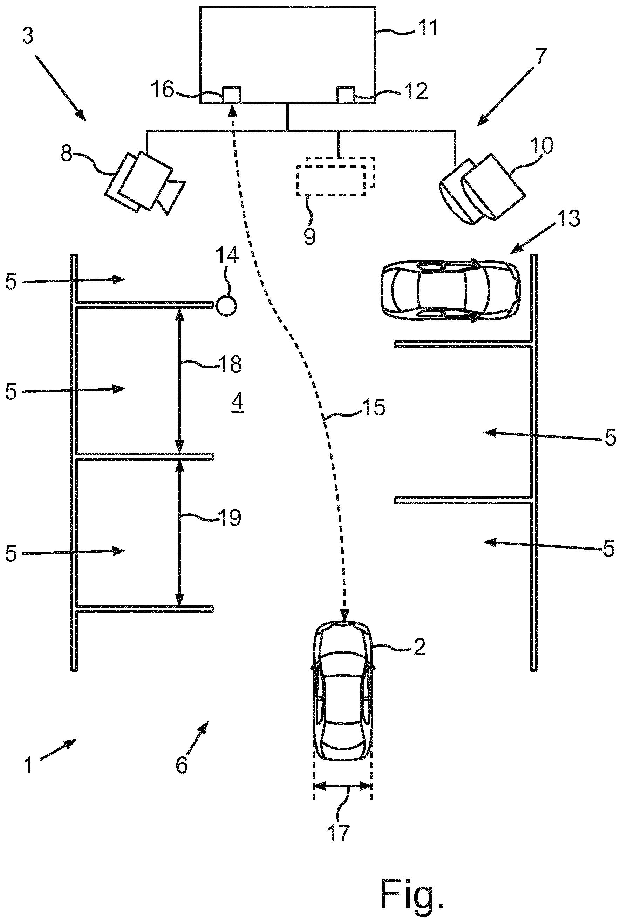

Es zeigt die einzige Figur eine schematische Darstellung einer Ausführungsform eines erfindungsgemäßen Parkflächenkommunikationssystemen.

Das in der Fig. gezeigte Parkflächenkommunikationssystem 1 weist ein Kraftfahrzeug 2 sowie eine Infrastrukturvorrichtung 3 auf. Die Infrastrukturvorrichtung 3 ist dazu ausgelegt, das Kraftfahrzeug 2 auf einer Parkfläche 4 für das Kraftfahrzeug 2 fernzusteuern bzw. ferngesteuert zu manövrieren. Die Parkfläche 4 kann beispielsweise als ein Teil eines Parkhauses ausgebildet sein. Die Parkfläche 4 weist eine Vielzahl von Parkplätzen bzw. Stellplätzen 5 für das Kraftfahrzeug 2 auf. Das Kraftfahrzeug 2 kann beispielsweise von einem Fahrer des Kraftfahrzeugs 2 in einem Einfahrtsbereich 6 zu der Parkfläche 4 abgestellt werden und durch die Infrastrukturvorrichtung 3, ohne Zutun des Fahrers und des Kraftfahrzeugs 2, zu einem freien, unbelegten Parkplatz 5 manövriert werden. Die Infrastrukturvorrichtung 3 weist zumindest eine Sensoreinrichtung 7 auf, welche verteilt auf der Parkfläche 4 angeordnet sein kann und mittels welcher die Parkfläche 4 überwacht werden kann. Die Sensoreinrichtung 7 weist hier zumindest eine Kamera 8, zumindest einen Radarsensor 9 sowie zumindest einen Lidar-Sensor 10 auf.

Mittels der zumindest einen Sensoreinrichtung 7 der parkflächenseitigen Infrastrukturvorrichtung 3 können Sensordaten aus der Parkfläche 4 erfasst werden. Die Sensordaten können, beispielsweise über ein lokales Drahtlosnetz auf der Parkfläche 4, einer Steuereinrichtung 11 der parkflächenseitigen Infrastrukturvorrichtung 3 übermittelt werden. Eine Recheneinheit 12 der Steuereinrichtung 11 kann die Sensordaten auswerten bzw. analysieren und Positionsdaten des Kraftfahrzeugs 2 sowie die Parkfläche 4 beschreibende Umfelddaten bzw. Umgebungsdaten bestimmen. Basierend auf den Positionsdaten des Kraftfahrzeugs 2 kann das Kraftfahrzeug 2 auf der Parkfläche 4 lokalisiert werden, beispielsweise relativ zu einem Bezugspunkt auf der Parkfläche 4. Anhand der Umgebungsdaten können Objekte auf der Parkfläche 4, beispielsweise ein anderes, geparktes Fahrzeug 13 und/oder ein Parkpoller 14, erfasst und deren Positionen bzw. Lagen relativ zum Kraftfahrzeug 2 bestimmt werden.

Außerdem ist die Infrastrukturvorrichtung 3, insbesondere eine Kommunikationseinheit 16 der Infrastrukturvorrichtung 3, dazu ausgelegt, einen Kommunikationskanal 15 ausgehend von der Infrastrukturvorrichtung 3 zu dem Kraftfahrzeug 2 aufzubauen. Der Kommunikationskanal 15 kann beispielsweise ein drahtloser Kommunikationskanal sein, welcher über das lokale Drahtlosnetz bzw. Wi-Fi aufgebaut werden kann. Über den Kommunikationskanal 15 kann das Kraftfahrzeug 1 ferngesteuert werden, indem die Steuereinrichtung 11 der Infrastrukturvorrichtung 3 über den Kommunikationskanal 15 kann 3 eine Längsführung und eine Querführung des Kraftfahrzeugs 2 übernimmt. Dazu kann die Steuereinrichtung 11 auf ein Fahrwerk sowie einen Antriebsstrang des Kraftfahrzeugs 2 zugreifen, also einen Antriebsmotor, ein Bremssystem sowie eine Lenkung des Kraftfahrzeugs 2 ansteuern. Insbesondere kann die Steuereinrichtung 11 der Infrastrukturvorrichtung 3 direkt und ohne Zwischenschaltung eines fahrzeugseitigen Steuergerätes auf die Längsführung und die Querführung des Kraftfahrzeugs 2 zugreifen.

Beispielsweise kann die Steuereinrichtung 11 der Infrastrukturvorrichtung 3 Steuerbefehle für Aktoren des Antriebs sowie des Fahrwerks des Kraftfahrzeugs 2 generieren, um das Kraftfahrzeug 2 fernzusteuern. Das Kraftfahrzeug 2 weist dabei insbesondere eine "X-by-Wire"-Schnittstelle auf, über welche das Kraftfahrzeug 2 mittels Steuerbefehlen gelenkt, beschleunigt sowie abgebremst werden kann. Das Kraftfahrzeug 2 kann dabei in Abhängigkeit von den Positionsdaten des Kraftfahrzeugs 2, welche beispielsweise alle 10s, vorzugsweise alle 0,1ms, anhand der Sensordaten der Sensoreinrichtung 7 bestimmt werden, sowie anhand der Umgebungsdaten bzw. Umfelddaten zu einem freien Parkplatz 5 manövriert werden.

Insbesondere kann die Infrastrukturvorrichtung 3 dazu ausgelegt sein, freie Parkplätze 5 auf der Parkfläche 4 zu erkennen. Dazu kann die Infrastrukturvorrichtung 3, beispielsweise anhand der Sensordaten der zumindest einen Sensoreinrichtung 7, einen Belegungszustand der Parkplätze 5 erfassen und diejenigen Parkplätze erkennen, welche beispielsweise nicht durch ein anderes Fahrzeug 13 belegt sind. Ausgehend von einer Startposition des Kraftfahrzeugs 2, beispielsweise an dem Einfahrtsbereich 6 der Parkfläche 4, kann dann eine Bewegungsbahn bzw. Fahrtrajektorie zu einem der freien Parkplätze 5 von der Infrastrukturvorrichtung 3 bestimmt werden, entlang welcher das Kraftfahrzeug 2 von der Infrastrukturvorrichtung 3 bewegt wird. Umgekehrt kann auch ein bereits geparktes Kraftfahrzeug 2 von dem Parkplatz 5, in welchem es abgestellt ist, zu einem Ausfahrtsbereich der Parkfläche 4 ferngesteuert werden, wo es von dem Fahrer des Kraftfahrzeugs 2 wieder abgeholt und übernommen werden kann.

Auch kann vorgesehen sein, dass die Infrastrukturvorrichtung 3 dazu ausgelegt ist, das Kraftfahrzeug 2 an dem Einfahrtsbereich 6 zu vermessen, also zumindest eine geometrische Abmessung des Kraftfahrzeugs 2 zu bestimmen. Beispielsweise kann anhand der Sensordaten der Sensoreinrichtung 7, insbesondere anhand der Kameradaten der Kamera 8, als die zumindest eine geometrische Abmessung eine Breite 17 des Kraftfahrzeugs 2 bestimmt werden. Diese Breite 17 kann dann mit verschiedenen Breiten 18,19 der freien Parkplätze 5 verglichen werden. Beispielsweise ist eine Breite 19 eines ersten, freien Parkplatzes 5 größer als eine Breite 18 eines zweiten, freien Parkplatzes 5. Dazu kann für die Infrastrukturvorrichtung 3 beispielsweise eine Infrastrukturkarte hinterlegt sein, in welcher die Parkplätze 5 sowie deren geometrische Abmessungen 18, 19 hinterlegt sind. Wenn beispielsweise nur der freie Parkplatz 5 mit der Breite 19 breit genug für das Kraftfahrzeug 2 ist, so kann die Bewegungsbahn von der Infrastrukturvorrichtung 3 ausgehend von dem Eingangsbereich 6 der Parkfläche 4 zu dem Parkplatz 5 mit der Breite 19 bestimmt werden.

Auch können solche Fahrzeugdaten bzw. fahrzeugseitigen Kenngrößen in Form von geometrischen Abmessungen über den Kommunikationskanal 15 durch die Infrastrukturvorrichtung 3 ausgelesen werden, sofern das Kraftfahrzeug 2 diese Fahrzeugdaten bereitstellt bzw. bereitstellen kann. Auch können Fahrdynamikdaten des Kraftfahrzeugs 2, beispielsweise Beschleunigungsdaten, Geschwindigkeitsdaten und Lenkwinkeldaten über den Kommunikationskanal 15 durch die Infrastrukturvorrichtung 3 ausgelesen werden. Diese Fahrdynamikdaten können beim Fernsteuern des Kraftfahrzeugs 2, beispielsweise bei der Bestimmung der Bewegungsbahn für das Kraftfahrzeug 2, durch die Infrastrukturvorrichtung 3 berücksichtigt werden.

## Patentansprüche

1. Verfahren zum ferngesteuerten Manövrieren eines Kraftfahrzeugs (2) auf einer Parkfläche (4) mittels einer fahrzeugexternen, parkflächenseitigen Infrastrukturvorrichtung (3), aufweisend folgende Schritte:
a) Bestimmen von Positionsdaten des Kraftfahrzeugs (2) auf der Parkfläche (4);
b) Aufbauen eines Kommunikationskanals (15) ausgehend von der Infrastrukturvorrichtung (3) in Richtung des Kraftfahrzeugs (2);
c) Übernehmen einer Längsführung und einer Querführung des Kraftfahrzeugs (2) über den Kommunikationskanal (15) zum Fernsteuern des Kraftfahrzeugs (2);
d) Manövrieren des Kraftfahrzeugs (2) auf der Parkfläche (4) in Abhängigkeit von den Positionsdaten des Kraftfahrzeugs (2),
wobei die Schritte a) bis d) durch die parkflächenseitige Infrastrukturvorrichtung (3) durchgeführt werden, **dadurch gekennzeichnet, dass** das Kraftfahrzeug (2) mittels der Infrastrukturvorrichtung (3) durch Bestimmen der Positionsdaten zu vorbestimmten Zeitpunkten auf der Parkfläche (4) lokalisiert wird und das Kraftfahrzeug (2) entlang einer vorbestimmten Bewegungsbahn zu einem Zielort auf der Parkfläche (4) ferngesteuert manövriert wird und dass das Kraftfahrzeug (2) mittels der Infrastrukturvorrichtung (3) zumindest alle 100ms auf der Parkfläche (4) lokalisiert wird.

2. Verfahren nach Anspruch 1,
**dadurch gekennzeichnet, dass**
zum Übernehmen der Längsführung und der Querführung des Kraftfahrzeugs (2) auf einen Antrieb und ein Fahrwerk des Kraftfahrzeugs (2) durch die Infrastrukturvorrichtung (3) zugegriffen wird, wobei durch die Infrastrukturvorrichtung (3) Steuerbefehle für Aktoren des Fahrwerks und des Antriebs generiert und über den Kommunikationskanal (15) versendet werden.

3. Verfahren nach Anspruch 1 oder 2,
**dadurch gekennzeichnet, dass**
die Positionsdaten des Kraftfahrzeugs (2) auf der Parkfläche (4) mittels zumindest einer parkflächenseitigen Sensoreinrichtung (7) der Infrastrukturvorrichtung (3) erfasst werden.

4. Verfahren nach Anspruch 3,
**dadurch gekennzeichnet, dass**
die Infrastrukturvorrichtung (3) die Positionsdaten des Kraftfahrzeugs (2) mittels zumindest einer parkflächenseitigen Kamera (8) und/oder zumindest einem parkflächenseitigen Abstandssensor, insbesondere einem Ultraschallsensor und/oder einem Lidar-Sensor (10) und/oder einem Radarsensor (9), erfasst.

5. Verfahren nach Anspruch 3 oder 4,
**dadurch gekennzeichnet, dass**
mittels der zumindest einen parkflächenseitigen Sensoreinrichtung (7) der Infrastrukturvorrichtung (3) zusätzlich die Parkfläche (4) beschreibende Umfelddaten erfasst werden und das Kraftfahrzeug (2) zusätzlich in Abhängigkeit von den Umfelddaten ferngesteuert wird.

6. Verfahren nach einem der vorhergehenden Ansprüche,
**dadurch gekennzeichnet, dass**
die Bewegungsbahn von einem Einfahrtsbereich (6) der Parkfläche (4) zu einem freien Parkplatz (5) führt und/oder von einem Parkplatz (5) des Kraftfahrzeugs (2) auf der Parkfläche (4) zu einem Ausfahrtsbereich der Parkfläche (4) führt.

7. Verfahren nach Anspruch 6,
**dadurch gekennzeichnet, dass**
durch die Infrastrukturvorrichtung (3) eine Belegung der Parkplätze (5) erfasst wird und die Bewegungsbahn durch die Infrastrukturvorrichtung (3) entlang einer Fahrgasse auf der Parkfläche (4) zu einem freien, als unbelegt erfassten Parkplatz (5) bestimmt wird.

8. Verfahren nach einem der vorhergehenden Ansprüche,
**dadurch gekennzeichnet, dass**
zumindest eine geometrische Abmessung (17) des Kraftfahrzeugs (2) an einem Startort des Kraftfahrzeugs (2) vor Beginn des Manövrierens des Kraftfahrzeugs (2) zu einem Zielort durch die Infrastrukturvorrichtung (3) bestimmt wird.

9. Verfahren nach einem der vorhergehenden Ansprüche,
**dadurch gekennzeichnet, dass**
zumindest eine fahrzeugseitige Kenngröße über den Kommunikationskanal (15) von der Infrastrukturvorrichtung (3) ausgelesen wird.

10. Verfahren nach Anspruch 9,
**dadurch gekennzeichnet, dass**
als die zumindest eine fahrzeugseitige Kenngröße Fahrdynamikdaten des Kraftfahrzeugs (2), insbesondere Geschwindigkeitsdaten, Beschleunigungsdaten, Lenkwinkeldaten, und/oder als die zumindest eine fahrzeugseitige Kenngröße Fahrzeugmodelldaten des Kraftfahrzeugs (2), insbesondere eine Geometrie, eine Kinematik, ein Steuerungsverhalten, ausgelesen wird.

11. Verfahren nach einem der vorhergehenden Ansprüche,
**dadurch gekennzeichnet, dass**
der Kommunikationskanal (15) über ein lokales Drahtlosnetz auf der Parkfläche (4) von der Infrastrukturvorrichtung (3) aufgebaut wird.

12. Infrastrukturvorrichtung (3) für eine Parkfläche (4) zum ferngesteuerten Manövrieren eines Kraftfahrzeugs (2) auf der Parkfläche (4), welche dazu ausgelegt ist, ein Verfahren nach einem der vorhergehenden Ansprüche durchzuführen.

13. Parkflächenkommunikationssystem (1) aufweisend zumindest ein Kraftfahrzeug (2) und eine Infrastrukturvorrichtung (3) nach Anspruch 12.

## Claims

1. Method for the remote-controlled manoeuvring of a motor vehicle (2) in a parking area (4) by means of an infrastructure apparatus (3) which is outside the vehicle and is in the parking area, having the following steps of:
a) determining position data relating to the motor vehicle (2) in the parking area (4);
b) setting up a communication channel (15) starting from the infrastructure apparatus (3) in the direction of the motor vehicle (2);
c) undertaking longitudinal guidance and lateral guidance of the motor vehicle (2) via the communication channel (15) in order to remotely control the motor vehicle (2);
d) manoeuvring the motor vehicle (2) in the parking area (4) on the basis of the position data relating to the motor vehicle (2),
wherein steps a) to d) are carried out by the infrastructure apparatus (3) in the parking area, **characterized in that** the motor vehicle (2) is located in the parking area (4) by means of the infrastructure apparatus (3) by determining the position data at predetermined times, and the motor vehicle (2) is manoeuvred in a remotely controlled manner along a predetermined movement path to a destination in the parking area (4), and **in that** the motor vehicle (2) is located in the parking area (4) by means of the infrastructure apparatus (3) at least every 100 ms.

2. Method according to Claim 1,
**characterized in that**
in order to undertake the longitudinal guidance and lateral guidance of the motor vehicle (2), the infrastructure apparatus (3) accesses a drive and a chassis of the motor vehicle (2), wherein control commands for actuators of the chassis and of the drive are generated by the infrastructure apparatus (3) and are transmitted via the communication channel (15).

3. Method according to Claim 1 or 2,
**characterized in that**
the position data relating to the motor vehicle (2) in the parking area (4) are captured by means of at least one sensor device (7) of the infrastructure apparatus (3) in the parking area.

4. Method according to Claim 3,
**characterized in that**
the infrastructure apparatus (3) captures the position data relating to the motor vehicle (2) by means of at least one camera (8) in the parking area and/or at least one distance sensor in the parking area, in particular an ultrasonic sensor and/or a lidar sensor (10) and/or a radar sensor (9).

5. Method according to Claim 3 or 4,
**characterized in that**
environmental data describing the parking area are additionally captured by means of the at least one sensor device (7) of the infrastructure apparatus (3) in the parking area, and the motor vehicle (2) is additionally remotely controlled on the basis of the environmental data.

6. Method according to one of the preceding claims,
**characterized in that**
the movement path leads from an entrance region (6) of the parking area (4) to a free parking space (5) and/or leads from a parking space (5) of the motor vehicle (2) in the parking area (4) to an exit region of the parking area (4).

7. Method according to Claim 6,
**characterized in that**
the infrastructure apparatus (3) captures an occupancy of the parking spaces (5), and the movement path is determined by the infrastructure apparatus (3) along a driving lane in the parking area (4) to a free parking space (5) captured as unoccupied.

8. Method according to one of the preceding claims,
**characterized in that**
at least one geometric dimension (17) of the motor vehicle (2) is determined by the infrastructure apparatus (3) at a starting location of the motor vehicle (2) before beginning to manoeuvre the motor vehicle (2) to a destination.

9. Method according to one of the preceding claims,
**characterized in that**
at least one characteristic variable of the vehicle is read by the infrastructure apparatus (3) via the communication channel (15).

10. Method according to Claim 9,
**characterized in that**
driving dynamics data relating to the motor vehicle (2), in particular speed data, acceleration data, steering angle data, are read as the at least one characteristic variable of the vehicle, and/or vehicle model data relating to the motor vehicle (2), in particular a geometry, kinematics, a control behaviour, are read as the at least one characteristic variable of the vehicle.

11. Method according to one of the preceding claims,
**characterized in that**
the communication channel (15) is set up by the infrastructure apparatus (3) via a wireless local area network in the parking area (4).

12. Infrastructure apparatus (3) for a parking area (4) for the remote-controlled manoeuvring of a motor vehicle (2) in the parking area (4), which infrastructure apparatus is designed to carry out a method according to one of the preceding claims.

13. Parking area communication system (1) having at least one motor vehicle (2) and an infrastructure apparatus (3) according to Claim 12.

## Revendications

1. Procédé de manœuvre commandée à distance d'un véhicule automobile (2) sur une aire de stationnement (4) au moyen d'un arrangement d'infrastructure (3) externe au véhicule, côté aire de stationnement, comprenant les étapes suivantes :
a) détermination de données de position du véhicule automobile (2) sur l'aire de stationnement (4) ;
b) établissement d'un canal de communication (15) à partir de l'arrangement d'infrastructure (3) en direction du véhicule automobile (2) ;
c) prise en charge d'un guidage longitudinal et d'un guidage transversal du véhicule automobile (2) par le biais du canal de communication (15) en vue de commander à distance le véhicule automobile (2) ;
d) manœuvre du véhicule automobile (2) sur l'aire de stationnement (4) en fonction des données de position du véhicule automobile (2),
les étapes a) à d) étant exécutées par l'arrangement d'infrastructure (3) côté aire de stationnement, **caractérisé en ce que** le véhicule automobile (2) est localisé au moyen de l'arrangement d'infrastructure (3) en déterminant les données de position à des instants prédéterminés sur l'aire de stationnement (4) et le véhicule automobile (2) est manœuvré en étant commandé à distance le long d'une trajectoire de déplacement prédéterminée jusqu'à un emplacement cible sur l'aire de stationnement (4), et **en ce que** le véhicule automobile (2) est localisé sur l'aire de stationnement (4) au moyen de l'arrangement d'infrastructure (3) au moins toutes les 100 ms.

2. Procédé selon la revendication 1, **caractérisé en ce que** pour la prise en charge d'un guidage longitudinal et d'un guidage transversal du véhicule automobile (2), une intervention sur un mécanisme propulseur et un châssis roulant du véhicule automobile (2) est effectuée par l'arrangement d'infrastructure (3), des instructions de commande étant générées par l'arrangement d'infrastructure (3) pour des actionneurs du châssis roulant et du mécanisme propulseur et envoyées par le biais du canal de communication (15).

3. Procédé selon la revendication 1 ou 2, **caractérisé en ce que** les données de position du véhicule automobile (2) sur l'aire de stationnement (4) sont acquises au moyen d'au moins un dispositif détecteur (7) côté aire de stationnement de l'arrangement d'infrastructure (3).

4. Procédé selon la revendication 3, **caractérisé en ce que** l'arrangement d'infrastructure (3) acquiert les données de position du véhicule automobile (2) au moyen d'au moins une caméra (8) côté aire de stationnement et/ou d'au moins un détecteur de distance côté aire de stationnement, notamment un détecteur à ultrasons et/ou un capteur lidar (10) et/ou un capteur radar (9).

5. Procédé selon la revendication 3 ou 4, **caractérisé en ce que** des données d'environnement qui décrivent l'aire de stationnement (4) sont en plus acquises au moyen de l'au moins un dispositif détecteur (7) côté aire de stationnement de l'arrangement d'infrastructure (3), et le véhicule automobile (2) est en outre commandé à distance en fonction des données d'environnement.

6. Procédé selon l'une des revendications précédentes, **caractérisé en ce que** la trajectoire de déplacement mène d'une zone d'entrée (6) de l'aire de stationnement (4) jusqu'à un emplacement de stationnement (5) libre et/ou d'un emplacement de stationnement (5) du véhicule automobile (2) sur l'aire de stationnement (4) jusqu'à une zone de sortie de l'aire de stationnement (4).

7. Procédé selon la revendication 6, **caractérisé en ce qu'**une occupation des emplacements de stationnement (5) est détectée par l'arrangement d'infrastructure (3) et la trajectoire de déplacement est déterminée par l'arrangement d'infrastructure (3) le long d'une voie de circulation sur l'aire de stationnement (4) jusqu'à un emplacement de stationnement (5) détecté non occupé.

8. Procédé selon l'une des revendications précédentes, **caractérisé en ce qu'**au moins une dimension géométrique (17) du véhicule automobile (2) est déterminée par l'arrangement d'infrastructure (3) au niveau d'un lieu de départ du véhicule automobile (2) avant le début de la manœuvre du véhicule automobile (2) vers un lieu cible.

9. Procédé selon l'une des revendications précédentes, **caractérisé en ce qu'**au moins une grandeur caractéristique côté véhicule est lue par l'arrangement d'infrastructure (3) par le biais du canal de communication (15).

10. Procédé selon la revendication 9, **caractérisé en ce que** l'au moins une grandeur caractéristique côté véhicule qui est lue sont des données dynamiques de conduite du véhicule automobile (2), notamment des données de vitesse, des données d'accélération, des données d'angle de braquage, et/ou l'au moins une grandeur caractéristique côté véhicule qui est lue sont des données de modèle de véhicule du véhicule automobile (2), notamment une géométrique, une cinématique, un comportement de commande.

11. Procédé selon l'une des revendications précédentes, **caractérisé en ce que** le canal de communication (15) est établi par l'arrangement d'infrastructure (3) par le biais d'un réseau sans fil local sur l'aire de stationnement (4).

12. Arrangement d'infrastructure (3) pour une aire de stationnement (4) destiné à manœuvrer à distance un véhicule automobile (2) sur l'aire de stationnement (4), lequel est conçu pour mettre en œuvre un procédé selon l'une des revendications précédentes.

13. Système de communication d'aire de stationnement (1), comprenant au moins un véhicule automobile (2) et un arrangement d'infrastructure (3) selon la revendication 12.
